# FASCICULE DE BREVET EUROPEEN

(11) **EP 2 870 198 B1**
(45) Date de publication et mention de la délivrance du brevet: **29.06.2016**
(21) Numéro de dépôt: 13744696.9
(22) Date de dépôt: 05.07.2013
(51) Int. Cl.: C08L 3/02, C08L 39/02, D21H 17/29, D21H 21/18

(54) **MELANGES DE POLYVINYLAMINES ET DE COMPOSITIONS DE MATIERES AMYLACEES CATIONIQUES LIQUIDES COMME AGENTS AMELIORANT LA RESISTANCE A SEC DES PAPIERS ET DES CARTONS**
MISCHUNGEN AUS POLYVINYLAMINEN UND FLÜSSIGEN ZUSAMMENSETZUNGEN AUS KATIONISCHEN STÄRKEHALTIGEN MATERIALIEN ALS MITTEL ZUR VERBESSERUNG DER TROCKENFESTIGKEIT VON PAPIER UND KARTON
MIXTURES OF POLYVINYLAMINES AND OF LIQUID COMPOSITIONS OF CATIONIC AMYLACEOUS MATERIALS AS AGENTS FOR IMPROVING THE DRY STRENGTH OF PAPER AND CARDBOARD

(30) Priorité: 06.07.2012 FR 1256548
(43) Date de publication de la demande: 13.05.2015
(73) Titulaire: Roquette Frères, 62136 Lestrem (FR)
(72) Inventeur: HOUZE, Régis, F-59551 Tourmignies (FR)
(74) Mandataire: Cabinet Plasseraud
(86) Numéro de dépôt international: PCT/FR2013/051603
(87) Numéro de publication internationale: WO 2014/006345

(56) Documents cités:
- WO-A1-2011/127268

## Description

La présente invention concerne des mélanges de polyvinylamines et de compositions de matières amylacées cationiques liquides ayant des caractéristiques très particulières de matière sèche, de viscosité, de taux d'azote et de pH. A travers cette sélection, on parvient à fabriquer des préparations qui s'avèrent particulièrement efficaces pour augmenter la résistance à sec de papiers ou de cartons.

La résistance à sec d'un papier ou d'un carton désigne son aptitude à résister, une fois sec, à une action mécanique de traction ou d'étirement. Cette propriété est particulièrement recherchée dans l'industrie de l'emballage. De manière classique, des agents de résistance à sec sont introduits dans la partie dite humide de la fabrication de la feuille de papier. Concrètement, ces agents sont ajoutés à la suspension de fibres, avant la formation de la feuille proprement dite.

Il est bien connu d'utiliser des polymères cationiques solubles dans l'eau pour améliorer les caractéristiques de résistance du papier. De par leur nature, ils peuvent se fixer directement sur la cellulose anionique et lui conférer une charge cationique de telle sorte qu'en association avec des polymères anioniques, il y ait fixation de ces derniers sur les fibres cellulosiques, améliorant ainsi la résistance à sec de la feuille.

Parmi les polymères cationiques communément mis en oeuvre, on peut citer les composés de type polyamide épichlorhydrine (PAE), polyamide amine épichlorhydrine (PAAE) ou encore des polyacrylamides cationiques comme décrits en arrière plan technologique du document WO 2006 / 090076.

Mais les produits les plus couramment utilisés pour améliorer cette résistance à sec sont probablement les compositions liquides de matières amylacées cationiques, lesdites matières amylacées cationiques pouvant éventuellement être modifiées. A travers cette dernière expression, on entend désigner des solutions aqueuses contenant au moins un amidon cationique, celui-ci ayant été éventuellement modifié. On pourra citer le document WO 2011 / 117177 qui décrit pour cet usage un mélange de composés à base d'aluminium et de polymères greffés d'amidon cationique, le document WO 03 / 087473 qui propose pour cette même fonctionnalité de combiner une résine anionique avec un amidon cationique, ou encore le document WO 01 / 86067 qui démontre une synergie entre un copolymère styrène / acide maléïque et de l'amidon cationique.

Outre ces espèces parmi lesquelles l'amidon cationique est le plus représenté industriellement, une autre famille de composés cationiques a retenu l'attention de l'homme du métier : celle des polyvinylamines. Initialement connus pour apporter de la rétention de charges, ces composés ont fait l'objet d'études qui ont démontré leur fonctionnalité en tant qu'agent améliorant la résistance à sec des papier (« Some properties of newsprint impregnated with polyvinylamine » Solutions & Tappi Journal, December 2002, Vol. 1 (10)).

On en trouve des exemples applicatifs dans le document EP 1 942 226 qui décrit un électrolyte à base d'un agent complexant et d'une polyvinylamine, dans le document WO 2009 / 059725 qui propose d'utiliser une cellulose réactive fonctionnalisée par une polyvinylamine ou dans le document WO 2004 / 061235 qui met en avant un mélange entre une polyvinylamine et un composé anionique ou du type aldéhyde fonctionnel.

Aussi et de manière assez évidente, l'homme du métier en est venu à combiner les polyvinylamines avec les matières amylacées cationiques. C'est l'objet du document WO 2011 / 127268, qui décrit de telles combinaisons contenant au moins 40 % en poids de matière sèche et, par rapport au poids total de polymère, de 55 % à 90 % en poids d'amidon cationique, et de 10 % à 45 % en poids de polyvinylamine.

Ce document affirme que de telles compositions sont stables et limpides tout en conduisant à des valeurs de résistance à sec améliorées par rapport à l'emploi de polyvinylamine seule. Il distingue le maïs cireux comme origine préférée de l'amidon cationique. Cependant, la lecture du tableau III démontre que la résistance à sec n'est améliorée que de 8 % au maximum par rapport à une référence commerciale, et qu'elle est même parfois inférieure à cette dernière (exemple 1-4).

Par conséquent, il subsiste un doute sur la capacité de toutes les combinaisons proposées dans le document WO 2011 / 127268, à améliorer effectivement la résistance à sec d'un papier. Parallèlement, si certaines de ces compositions augmentent bel et bien cette dernière propriété, elles ne le font que dans une moindre mesure : il existe un besoin non satisfait quant à des compositions de ce type, améliorant de manière bien plus significative la résistance à sec d'un papier.

Partant de ce constat et conduisant des travaux pour palier à ce manque, la Demanderesse est parvenue à mettre au point de nouvelles préparations contenant au moins une polyvinylamine et au moins une matière amylacée cationique, à la fois stables et limpides, et qui conduisent surtout à des valeurs de résistance à sec des papiers plus importantes que celles obtenues avec les compositions exemplifiées dans le document précité, et bien plus importantes que celles obtenues avec une référence commerciale.

Ces préparations sont caractérisées, entre autres, en ce que la matière amylacée cationique qu'elle renferme est issue d'une composition liquide de matière amylacée cationique très particulière. Celle-ci présente :
- une matière sèche en poids au moins égale à 10 %, de préférence comprise entre 10 et 50 %,
- une viscosité, déterminée selon un test T, supérieure à 200 mPa.s et au plus égale à 1000 mPa.s,
- un taux d'azote total au moins égal à 0,6 % et au plus égal à 1,6 %, ces pourcentages étant exprimés en poids sec par rapport au poids sec de composition,
- un pH inférieur à 9, de préférence compris entre 3,5 et 8,5.

Le test T, utilisé pour mesurer la viscosité d'une composition liquide de matière amylacée, consiste en premier lieu à déterminer, par toute méthode classique à la portée de l'homme de l'art, la matière sèche de ladite composition. En suite de quoi, on ajuste la matière sèche de manière à ce qu'elle soit égale à 10 %. Enfin, on mesure la viscosité Brookfield à 25 °C et à 20 tours/minute de la composition en question, celle-ci présentant donc une MS de 10 %.

Comme le montrent les essais qui supportent la présente Demande, c'est la sélection de tels paramètres qui conduit à des mélanges avec des polyvinylamines particulièrement efficaces comme agents améliorant la résistance à sec des papiers. Non seulement on améliore cette résistance par rapport à l'emploi de polyvinylamine seule, mais aussi par rapport à des combinaisons de produits commerciaux, cette amélioration étant bien plus prononcée que celle obtenue avec les combinaisons décrites dans le document WO 2011 / 127268 déjà cité.

Un des mérites de la Demanderesse est d'avoir su identifier la composition liquide de matière amylacée cationique la mieux appropriée, parmi les très nombreuses aujourd'hui disponibles sur le marché. A cet égard, on peut citer les produits commercialisés par RAISIO® sous la dénomination Raifix®. Ils sont issus d'une technologie décrite dans ses brevets WO 93/10305, WO 95/18157, WO 98/24972 et WO 99/18288. Celle-ci consiste globalement en la préparation et l'application de colles de fécule de pomme de terre hautement cationiques obtenues à partir de milieux réactionnels à hautes matières sèches (MS > 50 %), dont la moitié environ est apportée par le seul réactif de cationisation. Cette préparation implique une étape préalable d'oxydation de la matière amylacée par du peroxyde d'hydrogène. Le taux d'azote fixé des compositions dont l'usage est préférentiellement recommandé est globalement supérieur à 2 % et se situe le plus souvent entre 2,5 et 5 %.

Il existe également sur le marché, des compositions amylacées cationiques commercialisées par RAISIO® sous la dénomination Raibond® 15 ou Raisabond® 15 et qui sont moins cationiques que les compositions Raifix® précitées. Elles présentent cependant un taux d'azote fixé encore élevé, à savoir le plus souvent d'au moins 1,6 % environ. Leur pH reste également élevé, à savoir supérieur à 9. A la connaissance de la Demanderesse, d'autres compositions amylacées cationiques liquides sont ou ont été proposées aux industriels et qui, à l'inverse, présentent un taux d'azote relativement bas, à savoir inférieur à 0,5 %. C'est notamment le cas de la composition Redisize® 132 commercialisée par NATIONAL STARCH® correspondant à une solution à 8 % d'amidon de maïs waxy cationique utilisable pour la préparation de compositions d'agent de collage comme décrit dans le brevet US 6 296 696. Ces produits faiblement cationiques sont généralement issus de bases riches en amylopectine (amidons waxy) et peuvent présenter une structure branchée ou ramifiée comme décrite dans le document WO 00 / 49226.

La Demanderesse indique enfin qu'elle a déposé 2 demandes de brevets EP 1 641 875 et WO 01 / 96403. La première d'entre elles porte sur une composition amylacée cationique qui est celle utilisée dans les mélanges avec une polyvinylamine selon la présente invention : elle décrit donc les caractéristiques de matière sèche, de viscosité, de taux d'azote et de pH telles que signifiées plus haut. La seconde concerne des compositions amylacées cationiques, présentant un taux d'azote au plus égal à 2 %, et une viscosité très faible, à savoir inférieure à 1600 mPa.s pour une MS ajustée à 20 %. Comme l'a vérifié la Demanderesse dans le document EP 1 641 875, cette viscosité, si elle avait été mesurée pour une MS ajustée à 10 % (au lieu de 20 %), aurait été (très) inférieure à 200 mPa.s.

Aussi, un premier objet de la présente invention consiste en un mélange d'au moins une polyvinylamine et d'au moins une composition de matières amylacées cationiques liquide, dans un ratio compris entre 55 à 90 parts en poids sec de polyvinylamine pour 10 à 45 parts en poids sec de matière amylacée cationique, caractérisé en ce que la composition de matières amylacées cationiques liquide présente :
- une matière sèche en poids comprise entre 10 % et 50 %,
- une viscosité, déterminée selon un test T, supérieure à 200 mPa.s et au plus égale à 1000 mPa.s,
- un taux d'azote total au moins égal à 0,6 % et au plus égal à 1,6 %, ces pourcentages étant exprimés en poids sec par rapport au poids sec de composition,
- un pH inférieur à 9.

Le terme mélange fait ici référence à la composition qui contient au moins une polyvinylamine et au moins une composition de matières amylacées cationiques liquide ayant les caractéristiques énumérées ci-dessus.

Les matières amylacées cationiques sont en particulier obtenues par hydrolyse, préférentiellement par hydrolyse enzymatique.

Ce mélange est aussi caractérisé en ce qu'il présente une teneur en matière sèche totale comprise entre 5 % et 30 % en poids, préférentiellement entre 10 % et 25 % en poids.

Ce mélange est aussi caractérisé en ce qu'il présente un ratio préférentiel compris entre 60 à 80 parts en poids sec de polyvinylamine pour 20 à 40 parts en poids sec de matière amylacée cationique.

Ce mélange est aussi caractérisé en ce que la composition de matières amylacées cationiques liquide présente une matière sèche en poids préférentiellement comprise entre 10 % et 30 %.

Ce mélange est aussi caractérisé en ce que la composition de matières amylacées cationiques liquide présente un pH compris entre 3,5 et 8,5.

Ce mélange est aussi caractérisé en ce que les matières amylacées ont pour origine la fécule, le maïs, le blé, le pois ou leurs mélanges ; la fécule, en particulier de pomme-de-terre, étant la préférée dans la présente invention.

Ce mélange est également caractérisé en ce que la polyvinylamine comprend au moins un polymère de vinylamine choisi parmi les homopolymères et les terpolymères de vinylamine, les polymères à base de vinylformamide, lesdits polymères étant éventuellement modifiés après polymérisation et lesdits polymères étant totalement ou partiellement neutralisés ou encore sous forme acide.

Un autre objet de la présente invention consiste en un procédé de fabrication d'un mélange d'au moins une polyvinylamine et d'au moins une matière amylacée cationique, dans un ratio compris entre 55 à 90 parts en poids sec de polyvinylamine pour 10 à 45 parts en poids sec de matière amylacée cationique, caractérisé en ce qu'on mélange au moins une polyvinylamine avec au moins une composition de matières amylacées cationiques liquide présentant :
- une matière sèche en poids comprise entre 10 % et 50 %,
- une viscosité, déterminée selon un test T, supérieure à 200 mPa.s et au plus égale à 1000 mPa.s,
- un taux d'azote total au moins égal à 0,6 % et au plus égal à 1,6 %, ces pourcentages étant exprimés en poids sec par rapport au poids sec de composition,
- un pH inférieur à 9.

Dans le cadre de ce procédé, la composition de matières amylacées cationiques liquide présente toutes les caractéristiques qui ont été énumérées précédemment. Il en va de même pour la polyvinylamine

Un autre objet de la présente invention est l'utilisation des mélanges précités, comme agent améliorant la résistance à sec d'un papier ou d'un carton.

Un autre objet de la présente invention consiste en un procédé de fabrication d'un papier ou d'un carton par mise en oeuvre des mélanges précités.

Un dernier objet de la présente invention consiste en un papier ou un carton fabriqué à partir des mélanges précités.

Les exemples qui suivent permettront de mieux appréhender la présente invention, sans toutefois en limiter la portée.

### EXEMPLES

### Exemple 1

Cet exemple concerne uniquement la préparation et la description de différentes compositions de matières amylacées cationiques qui seront utilisées par la suite.

### Composition de Matière Amylacée n° 1 (CMA 1)

Il s'agit d'une composition entrant dans le cadre de la présente invention. Une poudre de fécule de pomme de terre présentant un taux d'azote total de 1,2 % (sec/sec) et obtenue en phase sèche conformément au brevet FR 2 434 821 au nom de la Demanderesse, est délayée et mise en suspension dans de l'eau déminéralisée froide de sorte à obtenir un lait d'amidon cationique à 11,5 % de matière sèche. Différents échantillons dudit lait sont traités, en cuve ouverte, avec des taux variables d'alpha-amylase et/ou avec des conditions opératoires différentes (durée, température de conversion notamment), l'objectif étant de pouvoir obtenir une composition amylacée cationique présentant une viscosité Brookfield (mesurée à 25 °C et à 20 tours/minute) d'environ 250 à 300 mPa.s et une MS de 10 % ou très légèrement supérieure. On a obtenu ainsi une composition amylacée cationique liquide présentant une matière sèche (MS) de 10,2 %, une viscosité Brookfield (25 °C - 20 tours/minute) de 330 mPa.s (soit de 290 mPa.s selon le test T après ajustement de la MS à 10 %), un taux d'azote total de 1,2 % et un pH de 5,3.

### Composition de Matière Amylacée n° 2 (CMA 2)

Il s'agit d'une composition entrant dans le cadre de la présente invention. Une poudre de fécule de pomme de terre présentant un taux d'azote total de 0,8 % (sec/sec) et obtenue en phase sèche conformément au brevet FR 2 434 821 au nom de la Demanderesse, est délayée et mise en suspension dans de l'eau déminéralisée froide de telle sorte à obtenir un lait d'amidon cationique à 22 % de matière sèche. Différents échantillons dudit lait sont traités, en cuve ouverte, avec des taux variables d'a-amylase et/ou des conditions opératoires différentes (durée, température de conversion notamment), l'objectif étant de pouvoir obtenir une composition amylacée cationique présentant une viscosité Brookfield (mesurée à 25 C et à 20 tours/minute) d'environ 2500 à 3000 mPa.s et une MS proche de 20 %. On a obtenu ainsi une composition amylacée cationique liquide présentant une matière sèche (MS) de 19,7 %, une viscosité Brookfield (25 C - 20 tours/minute) de 2580 mPa.s (soit de 350 mPa.s selon le test T après ajustement de la MS à 10 %), un taux d'azote total de 0,8 % et un pH de 5,1.

### Composition de Matière Amylacée n° 3 (CMA 3)

Il s'agit d'une composition entrant dans le cadre de l'art antérieur. C'est une composition amylacée cationique liquide avec une matière sèche d'environ 20 %, identique à la composition (2) utilisée dans l'exemple 4 du brevet WO 01 / 96403 et présentant donc une faible viscosité (100 mPa.s à une MS ajustée de 20 %), un taux d'azote total de 1,5 % (sec/sec) et un pH de 5,8.

### Composition de Matière Amylacée n° 4 (CMA 4)

Il s'agit d'une composition entrant dans le cadre de l'art antérieur. C'est une composition amylacée cationique liquide du commerce présentant une matière sèche d'environ 19 %, un taux d'azote total de 1,75 % (sec/sec), une viscosité BROOKFIELD (25 C 20 t/min) de 650 mPa.s (soit de 120 mPa.s après ajustement de sa MS à 10 % selon le test T) et un pH de 11.

### Exemple 2

Cet exemple concerne la préparation de différents mélanges entre une polyvinylamine commerciale qui est le produit Hercobond® 6363 (HERCULES®) dénommé PVAm (matière sèche d'environ 28 %) et les compositions amylacées cationiques visées à l'exemple 1. Cette polyvinylamine fait partie des 2 produits illustrés dans le document WO 2011 / 127268.

Les mélanges sont préparés sous agitation à température ambiante pendant environ 15 minutes. Leur pH est au final ajusté à 7 par addition de HCl. La composition de chaque mélange (ratio en poids sec de polyvinylamine par rapport à la matière amylacée) est indiquée dans le tableau 1.

**Tableau 1**

| | Ratio (PVAm / CMA) (poids sec) | MS (%) |
|---|---|---|
| | | |
| mélange 1 | 70 (PVAm) / 30 (CMA1) | 15,5 |
| mélange 2 | 70 (PVAm) / 30 (CMA2) | 22,4 |
| mélange 3 | 70 (PVAm) / 30 (CMA3) | 22,4 |
| mélange 4 | 70 (PVAm) / 30 (CMA4) | 21,7 |
| | | |
| mélange 5 | 65 (PVAm) / 35 (CMA1) | 16,4 |
| mélange 6 | 65 (PVAm) / 35 (CMA2) | 22,8 |
| mélange 7 | 65 (PVAm) / 35 (CMA3) | 22,8 |
| mélange 8 | 65 (PVAm) / 35 (CMA4) | 22,1 |

Visuellement et sur une période de 1 mois de stockage à température ambiante, aucun phénomène de ségrégation ou de sédimentation n'a été constaté pour les mélanges 1 à 8: on dispose donc de mélanges tout à fait stables.

### Exemple 3

Cet exemple porte sur la fabrication de feuilles de papier, par la mise en oeuvre des mélanges objets de l'exemple 2, dans la partie humide de la réalisation de la feuille.

Les feuilles ont été réalisées sur machine à papier avec les caractéristiques suivantes :
- la pulpe mise en oeuvre est recyclée à 100 % ; elle présente une dureté de 25 ppm, une alcalinité de 25 ppm, et une conductivité d'environ 2000 µS/cm
- le pH du système est de 7, l'indice d'égouttage est de 380 CSF à la température de 50 °C
- le poids est de 45 kg pour 280 m²
- on a enfin utilisé 0,3 % en poids sec de polymère (polyvinylamine seule ou polyvinylamine en mélange avec un amidon) par rapport au poids sec de pulpe, comme agent améliorant la résistance à sec, introduit en mélange avec la pulpe

Pour chaque feuille de papier réalisée, on a déterminé sa résistance à sec (tension à sec ou dry tensile) selon la méthode bien connue de l'homme du métier et dans les mêmes conditions que celles décrites dans le document WO 2011 / 127268. Un essai de référence est constitué par la polyvinylamine seule, dont on fixe arbitrairement le niveau à 100. Les résultats ont été reportés dans le tableau 2.

L'ensemble des mélanges fait apparaître une synergie par rapport à la polyvinylamine utilisée seule, ce qui avait déjà été observé dans le document WO 2011 / 127268. Les mélanges contenant des compositions amylacées cationiques selon l'art antérieur (essais n° 3, 4, 7 et 8) provoquent une augmentation modeste de la résistance à sec du papier, comprise entre 5 % et 8 %, ce qui est du même ordre de grandeur que les résultats obtenus dans le document WO 2011 / 127268. En revanche, il apparaît ici de manière nouvelle et particulièrement avantageuse, que l'emploi de mélanges contenant des compositions amylacées cationiques liquides selon l'invention (essais n° 1, 2, 5 et 6) augmente très sensiblement la résistance à sec du papier : de 20 % à 22 % par rapport à la référence.

**Tableau 2**

| ESSAI | ADDITIF | RESISTANCE A SEC |
|---|---|---|
| | | |
| Référence | PVAm | 100 |
| | | |
| essai 1 | mélange 1 | 121 |
| essai 2 | mélange 2 | 120 |
| essai 3 | mélange 3 | 108 |
| essai 4 | mélange 4 | 105 |
| | | |
| essai 5 | mélange 5 | 122 |
| essai 6 | mélange 6 | 120 |
| essai 7 | mélange 7 | 107 |
| essai 8 | mélange 8 | 105 |

## Revendications

1. Mélange d'au moins une polyvinylamine et d'au moins une composition de matières amylacées cationiques liquide, dans un ratio compris entre 55 à 90 parts en poids sec de polyvinylamine pour 10 à 45 parts en poids sec de matière amylacée cationique, **caractérisé en ce que** la composition de matières amylacées cationiques liquide présente :
- une matière sèche en poids comprise entre 10 % et 50 %,
- une viscosité, déterminée selon un test T, supérieure à 200 mPa.s et au plus égale à 1000 mPa.s,
- un taux d'azote total au moins égal à 0,6 % et au plus égal à 1,6 %, ces pourcentages étant exprimés en poids sec par rapport au poids sec de composition,
- un pH inférieur à 9.

2. Mélange selon la revendication 1, **caractérisé en ce qu'**il présente une teneur en matière sèche totale comprise entre 5 % et 30 % en poids, préférentiellement entre 10 % et 25 % en poids.

3. Mélange selon l'une des revendications 1 ou 2, **caractérisé en ce qu'**il présente un ratio préférentiel compris entre 60 à 80 parts en poids sec de polyvinylamine pour 20 à 40 parts en poids sec de matière amylacée cationique.

4. Mélange selon l'une quelconque des revendications 1 à 3, **caractérisé en ce que** la composition de matières amylacées cationiques liquide présente une matière sèche en poids préférentiellement comprise entre 10 % et 30 %.

5. Mélange selon l'une quelconque des revendications 1 à 4, **caractérisé en ce que** la composition de matières amylacées cationiques liquide présente un pH compris entre 3,5 et 8,5.

6. Mélange selon l'une quelconque des revendications 1 à 5, **caractérisé en ce que** la polyvinylamine comprend au moins un polymère de vinylamine choisi parmi les homopolymères et les terpolymères de vinylamine, les polymères à base de vinylformamide, lesdits polymères étant éventuellement modifiés après polymérisation et lesdits polymères étant totalement ou partiellement neutralisés ou encore sous forme acide.

7. Procédé de fabrication d'une mélange d'au moins une polyvinylamine et d'au moins une matière amylacée cationique, dans un ratio compris entre 55 à 90 parts en poids sec de polyvinylamine pour 10 à 45 parts en poids sec de matière amylacée cationique, **caractérisé en ce qu'**on mélange au moins une polyvinylamine avec au moins une composition de matières amylacées cationiques liquide présentant :
- une matière sèche en poids comprise entre 10 % et 50 %,
- une viscosité, déterminée selon un test T, supérieure à 200 mPa.s et au plus égale à 1000 mPa.s,
- un taux d'azote total au moins égal à 0,6 % et au plus égal à 1,6 %, ces pourcentages étant exprimés en poids sec par rapport au poids sec de composition,
- un pH inférieur à 9.

8. Utilisation des mélanges selon l'une quelconque des revendications 1 à 6, comme agent améliorant la résistance à sec d'un papier ou d'un carton.

9. Procédé de fabrication d'un papier ou d'un carton par mise en oeuvre des mélanges selon l'une quelconque des revendications 1 à 6.

10. Papier ou carton fabriqué à partir des mélanges selon une des revendications 1 à 6.

## Patentansprüche

1. Gemisch aus mindestens einem Polyvinylamin und mindestens einer Zusammensetzung aus flüssigen kationischen stärkehaltigen Materialien, in einem Verhältnis, umfassend zwischen 55 bis 90 Gewichtsanteile Polyvinylamin, bezogen auf die Trockenmasse, zu 10 bis 45 Gewichtsanteilen, bezogen auf die Trockenmasse, kationisches stärkehaltiges Material, **dadurch gekennzeichnet, dass** die Zusammensetzung aus flüssigen kationischen stärkehaltigen Materialien aufweist:
- einen Trockenmassegehalt, umfassend zwischen 10% und 50%,
- eine Viskosität, bestimmt durch einen T-Test, über 200 mPa.s und höchstens gleich 1000 mPa·s,
- einen Gesamtanteil Stickstoff von mindestens 0,6 % und von höchstens 1,6 %, wobei diese Prozentanteile als Trockenmasse bezüglich der Trockenmasse der Zusammensetzung angegeben sind,
- einen pH-Wert unter 9.

2. Gemisch nach Anspruch 1, **dadurch gekennzeichnet, dass** es eine Gesamttrockenmasse zwischen 5 Gew.-% und 30 Gew.-%, vorzugsweise zwischen 10 Gew.-% und 25 Gew.-% aufweist.

3. Gemisch nach einem der Ansprüche 1 oder 2, **dadurch gekennzeichnet, dass** es ein Verhältnis aufweist, vorzugsweise umfassend zwischen 60 bis 80 Gewichtsanteile, bezogen auf die Trockenmasse, Polyvinylamin, zu 20 bis 40 Gewichtsanteilen, bezogen auf die Trockenmasse, kationisches stärkehaltiges Material.

4. Gemisch nach einem der Ansprüche 1 bis 3, **dadurch gekennzeichnet, dass** die Zusammensetzung aus flüssigen kationischen stärkehaltigen Materialien eine Trockenmasse von vorzugsweise zwischen 10 % und 30 % aufweist.

5. Gemisch nach einem der Ansprüche 1 bis 4, **dadurch gekennzeichnet, dass** die Zusammensetzung aus flüssigen kationischen stärkehaltigen Materialien einen pH-Wert zwischen 3,5 und 8,5 aufweist.

6. Gemisch nach einem der Ansprüche 1 bis 5, **dadurch gekennzeichnet, dass** das Polyvinylamin mindestens ein Vinylaminpolymer umfasst, ausgewählt aus den Homopolymeren und den Terpolymeren von Vinylamin, den Polymeren auf Vinylformidbasis, den entsprechenden Polymeren, die gegebenenfalls nach Polymerisation modifiziert wurden, und den entsprechenden Polymeren, die vollständig oder teilweise neutralisiert wurden oder außerdem in Säureform sind.

7. Verfahren zur Herstellung eines Gemischs aus mindestens einem Polyvinylamin und mindestens einem kationischen stärkehaltigen Material, in einem Verhältnis, umfassend zwischen 55 bis 90 Gewichtsanteile Polyvinylamin, bezogen auf die Trockenmasse, zu 10 bis 45 Gewichtsanteilen, bezogen auf die Trockenmasse, kationisches stärkehaltiges Material, **dadurch gekennzeichnet, dass** man mindestens ein Polyvinylamin mit mindestens einer Zusammensetzung aus flüssigen kationischen stärkehaltigen Materialien mischt, umfassend:
- einen Trockenmassegehalt, umfassend zwischen 10% und 50%,
- eine Viskosität, bestimmt durch einen T-Test, über 200 mPa·s und höchstens gleich 1000 mPa·s,
- einen Gesamtanteil Stickstoff von mindestens 0,6 % und von höchstens 1,6 %, wobei diese Prozentanteile als Trockengewicht bezüglich des Trockengewichts der Zusammensetzung angegeben sind,
- einen pH-Wert unter 9.

8. Verwendung von Gemischen nach einem der Ansprüche 1 bis 6 als Mittel zur Verbesserung der Trockenfestigkeit von Papier oder Karton.

9. Verfahren zur Herstellung von Papier oder Karton durch Verwendung der Gemische nach einem der Ansprüche 1 bis 6.

10. Papier oder Karton, hergestellt aus den Gemischen nach einem der Ansprüche 1 bis 6.

## Claims

1. A mixture of at least one polyvinylamine and of at least one liquid composition of cationic starchy materials, in a ratio between 55 to 90 parts by dry weight of polyvinylamine per 10 to 45 parts by dry weight of cationic starchy material, **characterized in that** the liquid composition of cationic starchy materials has:
- a solids content by weight of between 10% and 50%,
- a viscosity, determined according to a test T, of greater than 200 mPa.s and at most equal to 1000 mPa.s,
- a total nitrogen content at least equal to 0.6% and at most equal to 1.6%, these percentages being expressed by dry weight relative to the dry weight of composition,
- a pH below 9.

2. The mixture as claimed in claim 1, **characterized in that** it has a total solids content of between 5% and 30% by weight, preferably between 10% and 25% by weight.

3. The mixture as claimed in either of claims 1 and 2, **characterized in that** it has a preferred ratio of between 60 to 80 parts by dry weight of polyvinylamine per 20 to 40 parts by dry weight of cationic starchy material.

4. The mixture as claimed in any one of claims 1 to 3, **characterized in that** the liquid composition of cationic starchy materials has a solids content by weight preferably of between 10% and 30%.

5. The mixture as claimed in any one of claims 1 to 4, **characterized in that** the liquid composition of cationic starchy materials has a pH between 3.5 and 8.5.

6. The mixture as claimed in any one of claims 1 to 5, **characterized in that** the polyvinylamine comprises at least one vinylamine polymer selected from vinylamine homopolymers and terpolymers, vinylformamide-based polymers, said polymers being optionally modified after polymerization and said polymers being completely or partially neutralized or else in acid form.

7. A process for manufacturing a mixture of at least one polyvinylamine and of at least one cationic starchy material, in a ratio between 55 to 90 parts by dry weight of polyvinylamine per 10 to 45 parts by dry weight of cationic starchy material, **characterized in that** at least one polyvinylamine is mixed with at least one liquid composition of cationic starchy materials having:
- a solids content by weight of between 10% and 50%,
- a viscosity, determined according to a test T, of greater than 200 mPa.s and at most equal to 1000 mPa.s,
- a total nitrogen content at least equal to 0.6% and at most equal to 1.6%, these percentages being expressed by dry weight relative to the dry weight of composition,
- a pH below 9.

8. The use of the mixtures as claimed in any one of claims 1 to 6, as agent for improving the dry strength of a paper or of a cardboard.

9. A process for manufacturing a paper or cardboard by using the mixtures as claimed in any one of claims 1 to 6.

10. A paper or cardboard manufactured from the mixtures as claimed in one of claims 1 to 6.
